# EUROPÄISCHE PATENTANMELDUNG

(11) **EP 1 227 672 A2**
(43) Veröffentlichungstag der Anmeldung: **31.07.2002**
(21) Anmeldenummer: 02100031.0
(22) Anmeldetag: 17.01.2002
(51) Int. Cl.: H04N 5/232

(54) **Aufnahmekontrolle für ein Bildaufnahmegerät**

(30) Priorität: 22.01.2001 DE 10102749
(71) Anmelder: SIEMENS AKTIENGESELLSCHAFT, 80333 München (DE)
(72) Erfinder: Seytter, Fritz, 81541, München (DE)

(57) **Zusammenfassung**

Die Erfindung betrifft ein Verfahren zur Aufnahmekontrolle für ein Endgerät mit einer elektronischen Kamera und mit einer Anzeigeeinrichtung, wobei ein Bilddatensatz aus den Bilddaten von mehreren aufeinanderfolgenden Bildern errechnet wird, bei dem auf der Anzeigeeinrichtung ein Toleranzbereich dargestellt wird, dessen Position mit dem ersten Bild gekoppelt ist, und bei dem auf der Anzeigeeinrichtung eine Markierung dargestellt wird, deren Position mit dem gerade aktuellen Bild gekoppelt ist.

## Beschreibung

Die Erfindung betrifft ein Verfahren zur Aufnahmekontrolle für ein Endgerät mit einer elektronischen Kamera und mit einer Anzeigeeinrichtung. So ein Endgerät ist beispielsweise ein Video-Mobiltelefonen, wie es in zukünftigen Standards vorgesehen ist, oder eine mobile digitale Kamera. Die Kameras beziehungsweise Bildaufnahmevorrichtungen in diesen Video-Mobiltelefonen sind für den Consumerbereich vorzugsweise sehr billig ausgeführt und haben deshalb nur eine feste Brennweite und eine relativ einfache Optik. Die Optik ist mit einem Bilddatensensor gekoppelt, der beispielsweise durch einen sogenannten CCD-Chip realisiert ist. Der Bilddatensensor rauscht bei Erwärmung stärker und liefert dadurch schlechtere Bilder. Zudem versucht man, die empfindliche Fläche des Bilddatensensors aus Kostengründen und Miniaturisierungsgründen möglichst klein auszulegen, was wiederum zu einem stärkeren Rauschen führt.

Um die Funktionalität von Mobiltelefonen zu erweitern, kann man sich Anwendungen wie das mobile Fax oder digitale Fotografie vorstellen. Besonders beim Fax-Betrieb ist man auf eine vergleichsweise hohe Bildauflösung angewiesen.

Es ist denkbar, die Bildauflösung durch Verwendung von mehreren Bildern, die dann zu einem einzigen Bild "zusammengerechnet" werden, zu verbessern. Aus den Bilddaten von mehreren Bildern wird dabei ein Bilddatensatz errechnet, der dann eine verbesserte Auflösung bietet.

Bei Verwendung diese Methode ist es notwendig, eine in freier Hand gehaltene Videokamera über eine längere Zeitspanne auf ein Motiv zu richten. Die durch den natürlichen Tremor gegebene unvermeidliche und für die Auflösungsverbesserung notwendige Zitterbewegung ist erwünscht, eine grössere Verschiebung oder Verdrehung des Bildausschnittes dagegen nicht. Die ist insbesondere bei den auftretenden längeren Belichtungszeiten problematisch.

Der Erfindung liegt die Aufgabe zugrunde, eine Aufnahmekontrolle für ein Endgerät mit einer digitalen Kamera, insbesondere bei längeren Belichtungszeiten, anzugeben.

Diese Aufgabe wird erfindungsgemäß durch die im Patentanspruch 1 angegebenen Merkmale gelöst.

Im Folgenden wird die Erfindung anhand eines in der Zeichnung dargestellten Ausführungsbeispieles näher erläutert. Dabei zeigen:
Figur 1 und 2 Varianten einer Zieleinrichtung als Eingabehilfe,
Figur 3 eine Zieleinrichtung für rotatorische Bewegungen.

Der Erfindung geht davon aus, die Bildauflösung durch Verwendung von mehreren Bildern, die dann zu einem einzigen Bild "zusammengerechnet" werden, zu verbessern. Aus den Bilddaten von mehreren Bildern wird dabei ein Bilddatensatz errechnet, der dann eine verbesserte Auflösung bietet.

Bei Verwendung einer mobilen Kamera, beispielsweise einem Video-Handy, mit der beispielsweise für ein Fax eine Zeichnung auf einem Blatt Papier abfotografiert wird, entstehen diese Bilder durch Verwackeln, wobei jedes Einzelbild annähernd den gleichen Bildausschnitt zeigt. Die geringfügig unterschiedlichen Bildausschnitte entstehen beim Verwackeln durch zufällige Bewegungen. Beschreibt man die Änderungen zwischen aufeinanderfolgenden Bildern, so kann jedem Bildpunkt ein in Richtung und Amplitude zufälliger Verschiebevektor zugeordnet werden.

Die durch Verwackeln erzeugten Bilder setzt man zueinander in Korrelation und kann dadurch kleinere Fehler der verwendeten Optik ausgleichen. Weiter kann durch Extrapolation die Auflösung verbessert werden. Dabei können fehlende Bildpunkte, die durch die große Anzahl von Einzelbildern sicher als solche identifiziert werden konnten, nachträglich ergänzt werden.

Bei den hierbei auftretenden längeren Belichtungszeiten sind grössere Bildverschiebungen, insbesondere rotatorische Bewegungen, die zu einer grossen Verschiebung am Bildrand führen, zu vermeiden.

Erfindungsgemäß wird eine Eingabehilfe beziehungsweise eine Aufnahmekontrolle vorgeschlagen, bei der auf einem Sucherbildschirm, beispielsweise der Anzeigeeinrichtung des Video-Mobiltelefons, zusätzlich zum aktuellen Bild eine Zieleinrichtung eingeblendet wird.

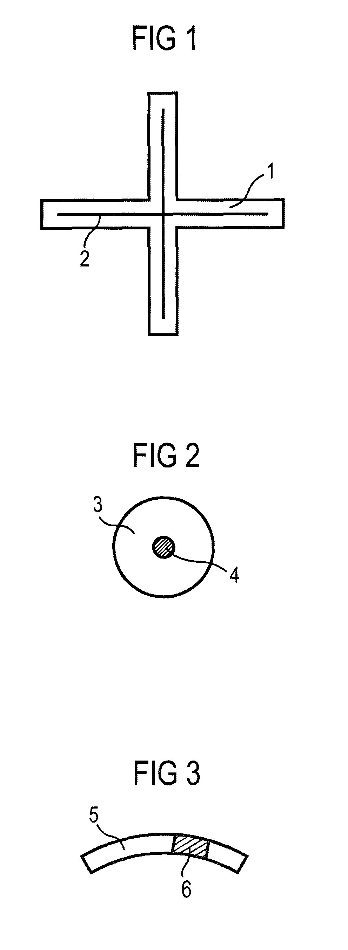

In Figur 1 ist eine Zieleinrichtung dargestellt, die aus einem kreuzförmigen Toleranzbereich 1 und einem Fadenkreuz 2 besteht. Der Toleranzbereich 1 ist fest, beispielsweise in der Bildmitte zentrisch angeordnet. Der Toleranzbereich 1 ist in seiner Lage mit einem ersten Bild gekoppelt, das zusammen mit folgenden Bilder den in seiner Auflösung verbesserten Bilddatensatz liefert. Das Fadenkreuz 2 bildet eine Markierung, deren Lage mit dem gerade aktuellen Bild gekoppelt ist.

Das bewegliche Fadenkreuz 2 zeigt in Relation zum Toleranzbereich 1 den berechneten Versatz beziehungsweise die berechnete Verschiebung des aktuellen Bildes zum ersten Bild. Für den Anwender verschiebt sich das bewegliche Fadenkreuz 2 zusammen mit dem Motiv gegenüber der Bildmitte und damit gegenüber dem fixen Toleranzbereich 1.

Der Benutzer kann somit während der Aufnahme überprüfen, ob er die Kamera innerhalb eines zulässigen Toleranzbereiches auf das Motiv gerichtet hält, oder ob seine Bewegung zu einer Verschiebung im Bild führt.

In Figur 2 ist eine Zieleinrichtung dargestellt, deren Toleranzbereich 3 und dessen Markierung 4 kreis- beziehungsweise punktförmig ausgebildet sind.

In Figur 3 ist in einer Weiterbildung der Erfindung eine Zieleinrichtung für rotatorische Bewegungen dargestellt, Die Zieleinrichtung besteht aus einem kreisförmigen Segmentbereich 5 und einem Markierungssegment 6.

Ein Bildaufnahme läuft folgendermaßen ab. Der Benutzer richtet die Kamera auf ein Motiv und betätigt den Auslöser. Hierdurch wird die Einblendung der Zieleinrichtung in das Sucherbild oder auf die Anzeigeeinrichtung bewirkt. Das Motiv kann vergrössert dargestellt werden, so dass die Auflösungsverbesserung direkt ablesbar ist. Mit Hilfe der Zieleinrichtung können Bildfehler bei längeren Belichtungszeiten vermieden werden.

Die Grösse des Toleranzbereiches ist durch den in der Kamera verwendet Bildaufnahmesensor und letztlich durch die zur Verfügung stehende Rechenleistung bestimmt. Es ist zu erwarten, dass die Auflösungsverbesserung am grössten ist, wenn die Bewegung beziehungsweise Zitterbewegung innerhalb der Bildsequenz, die zu den unterschiedlichen Bildausschnitten führt, im sub-pixel Bereich bleibt, da Nichtlinearitäten der optischen Abbildung die Berechnung über grössere Distanzen sehr erschweren.

Die Verwacklung hängt relativ stark von der Person des Benutzers selbst ab. Es ist deshalb keine Vorhersage über den zeitlichen der Bewegung möglich.

Bei einer Weiterbildung der Erfindung wird vorgeschlagen, den im Mobilfunkgerät beziehungsweise Handy eingebauten Vibrationsalarm zur Initiierung der Verwacklungsbewegung zu Verwenden. Der Rüttelgenerator des Mobiltelefons erzeugt während der Aufnahme eine Bewegung, die in ihrem zeitlichen Verlauf besser vorhersagbar ist. Der Rüttelgenerator wird beispielsweise beim Betätigen des Auslöser eingeschaltet und beim Loslassen wieder ausgeschaltet. Es ist auch möglich, den Generator für eine vorgegeben Anzahl von Aufnahmen beziehungsweise Bildern oder für eine vorgegebene Zeitdauer zu aktivieren.

## Patentansprüche

1. Verfahren zur Aufnahmekontrolle für ein Endgerät mit einer elektronischen Kamera und mit einer Anzeigeeinrichtung, wobei ein Bilddatensatz aus den Bilddaten von mehreren aufeinanderfolgenden Bildern errechnet wird,
bei dem auf der Anzeigeeinrichtung ein Toleranzbereich dargestellt wird, dessen Position mit dem ersten Bild gekoppelt ist, und
bei dem auf der Anzeigeeinrichtung eine Markierung dargestellt wird, deren Position mit dem gerade aktuellen Bild gekoppelt ist.

2. Verfahren nach Anspruch 1,
bei dem der Toleranzbereich einen kreisförmigen Segmentbereich und die Markierung ein Kreissegment enthalten.

3. Verfahren nach Anspruch 1 oder 2,
bei dem die Verwacklung durch den Vibrationsalarm des Video-Mobiltelefons unterstützt wird.
